# EUROPEAN PATENT SPECIFICATION

(11) **EP 0 624 886 B1**
(45) Date of publication and mention of the grant of the patent: **17.12.1997**
(21) Application number: 94201321.0
(22) Date of filing: 10.05.1994
(51) Int. Cl.: H01F 27/255, C04B 35/26, H01F 1/34

(54) **Sintered transformer or inductor core of NiZn ferrite material**
Gesinterte Kern für Transformator oder Induktor aus NiZn Ferrit Material
Noyau fritté pour transformateur ou inductance en matériau de ferrite Ni-Zn

(30) Priority: 11.05.1993 BE 9300483; 21.01.1994 EP 94200153
(43) Date of publication of application: 17.11.1994
(73) Proprietor: PHILIPS ELECTRONICS N.V., 5621 BA Eindhoven (NL)
(72) Inventor: van der Zaag, Pieter Jan, NL-5656 AA Eindhoven (NL); Noordermeer, Arjan, NL-5656 AA Eindhoven (NL); van der Valk, Pieter Johan, NL-5656 AA Eindhoven (NL)
(74) Representative: van der Veer, Johannis Leendert

(56) References cited:
- EP-A- 0 460 760
- DE-A- 1 449 403
- US-A- 4 372 865
- FERRITES, PROCEEDINGS OF THE ICF 3, September 1980, Tokyo, JP, pp 257-264; R.K. MISHRA ET AL.. "Recent Progress in Electron Microscopy of Ferrites"

## Description

The invention relates to a sintered transformer or inductor core of NiZn ferrite material. The invention also relates to an inductor and a transformer which are provided with such an inductor respectively transformer core. By means of a transformer the voltage and/or the current intensity of a current source can be converted to another desired voltage and/or current intensity.

A transformer core of the type mentioned in the opening paragraph is known *per se*. For example, in Philips Data Handbook MA-01, 1993, pp. 131 and 132, a NiZn core is disclosed which is referred to as 4F1. The material composition of the core described in said handbook corresponds to the formula Ni_{0.49}Zn_{0.49}Co_{0.02}Fe_{1.90}O_{3.85}. This transformer core is intended for use, in particular, in a so-called "power-transformer". This type of transformer can suitably be operated at frequencies in the MHz range and at relatively high induction values of 5 mT or higher.

The drawback of the known transformer or inductor core is that it exhibits relatively high overall losses per volume unit (P) if it is used in a "power-transformer". Said losses cause the transformer to heat up. In particular, if the transformer is used at frequencies of from 2 MHz it heats up to relatively high temperatures. For example, as shown in fig. 7 on page 132, at 20°C an overall loss per volume unit of 190 mW/cm³ is measured on these cores at an induction of 10 mT and a frequency of 3 MHz.

It is an object of the invention to provide a transformer or inductor core which exhibits relatively low overall losses, in particular, when it is used in a power transformer. The invention further aims at providing an inductor as well as a power transformer which are provided with such an inductor respectively transformer core.

These and other objects are achieved in accordance with the invention by a transformer or inductor core of the type mentioned in the opening paragraph, which is characterized in that the majority of the grains of ferrite material have a monodomain structure.

It has been found that sintered cores of NiZn ferrite material having predominantly monodomain grains exhibit surprisingly low overall losses. As will be described in greater detail in the exemplary embodiments, the measure in accordance with the invention enables overall losses to be reduced by 50% or more. An exact explanation for this substantial decrease of the losses is not available as yet. The Applicant of the present invention, however, has experimentally established that said low losses are independent of the magnetic permeability (µ) and, in the case of small grain sizes, of the exact grain size. It has been found that an essential prerequisite of attaining the effect of the invention is that the majority of the grains of the sintered material has a monodomain structure. The expression "the majority of the grains" is to be understood to mean herein that at least 90% of the grains of the ferrite material has a monodomain structure.

A preferred embodiment of the invention is characterized in that the average grain size of the material is less than 2.8 µm. The Applicant of the present invention has established in a series of experiments that the quantity of monodomain grains is approximately 90% if the average grain size is approximately 2.8 µm. At a smaller average grain size, the quantity of monodomain particles increases proportionally. A level of approximately 100% of monodomain grains is attained at an average grain size below approximately 2.6 µm. However, a loss mechanism which is not yet understood causes the overall losses to increase if the average size of the monodomain grains is selected to be smaller than 1.1 µm. In the preferred average grain size range of from 1.3 to 2.6 µm, the overall losses are substantially constant and substantially independent of the grain size. The grain size of the sintered NiZn cores was determined by means of the so-called "linear mean-intercept" method.

It is noted that the majority of the grains of the known 4F1 material did not have a monodomain structure. The average grain size was approximately 3.1 microns.

A further favourable embodiment of the sintered core in accordance with the invention is characterized in that the ferrite material of the core comprises 42.8-55.9 mol% Fe₂O₃, 17.6-45.7 mol% NiO and 8.4-34.3 mol% ZnO. Cores whose composition falls within said limits exhibit a relatively high spontaneous induction (B_{S}). This has a favourable effect on said cores, since the losses are relatively low as compared to cores having a relatively low saturation magnetization.

It is noted that the ferrite material preferably comprises a relatively small quantity of Co. The presence of this additive leads to a relatively plane µ-T curve, in particular in the temperature range in which power transformers are operated. However, a quantity of Co in excess of 1.5 at. % is disadvantageous. It does not result in a higher degree of planeness of said curve. Moreover, Co is expensive and toxic. The ferrite material in accordance with the invention may further comprise small quantities of dopants, such as in particular sintering agents, for example V₂O₅ and Bi₂O₃. In addition, MnO, SiO₂ and CaO may be present. The maximum quantity of each of said dopants, however, is less than 2 wt.%.

Another preferred embodiment of the core in accordance with the invention is characterized in that the ferrite material of the core comprises 42.8-50.0 mol% Fe₂O₃, 20.0-45.7 mol% NiO and 10.0-34.3 mol% ZnO. Unlike the above-mentioned composition range, the NiZn ferrites described in this preferred embodiment all have an Fe deficiency. An Fe deficiency is favourable because, by virtue thereof, the presence of Fe²⁺ ions in the ferrite material is precluded. The presence of said ions leads to increased eddy-current losses.

A further interesting embodiment of the inventive core is characterized in that the ratio of the average grain size d to the initial permeability µᵢ at the Curie temperature is d/µᵢ <4 nm. This ratio is denoted by δ (delta).

The last-mentioned embodiment is based on the observation that, at relatively high induction values (B> 15 mT), hysteresis losses in the sintered ferrite material comprising monodomain grains contribute substantially to the overall losses if the value of δ is selected to be relatively high. This contribution can be reduced considerably by making said δ-value smaller than 4 nm. In this case, a smaller part of the applied field is present across the grain boundary during operation of the sintered core. As a result, a larger part of the applied field is available for varying the magnetisation of the ferrite material in accordance with the desired wave shape. It has been found that the value of δ depends to a smaller or greater degree on the deviation from the stoichiometry of the ferrite material. At greater deviations from the stoichiometry, a larger quantity of divalent metal oxides (for example NiO and/or ZnO) will be deposited on the grain boundaries. This causes an increase of the value of δ. In sintered ferrite materials which are substantially stoichiometric the value of δ is below 4 nm.

The invention also relates to an inductor. The essential component of such an inductor is a single sintered inductor core which comprises a winding. In accordance with the invention, an inductor core as described above is used in the inductor.

The invention also relates to a transformer comprising a transformer core having a primary and a secondary winding as well as a high-frequency switch for converting a DC voltage on the primary winding to a square-wave voltage. This transformer comprises a transformer core in accordance with the present invention and is used in a so-called "switched-mode power supply". This type of transformer is generally operated at high frequencies and high inductions. Consequently, the transformer cores in accordance with the invention can be very advantageously used in said transformers.

Embodiments of the invention will be explained in greater detail by means of examples and with reference to the accompanying drawings, in which
Fig. 1 is a perspective view of a transformer core in accordance with the invention,
Fig. 2 graphically shows the losses per volume unit P (mW/cm³) as a function of the grain size d (µm) of a number of transformer cores.
Fig. 3 diagrammatically shows a switched-mode power supply (SMPS) in accordance with the invention.

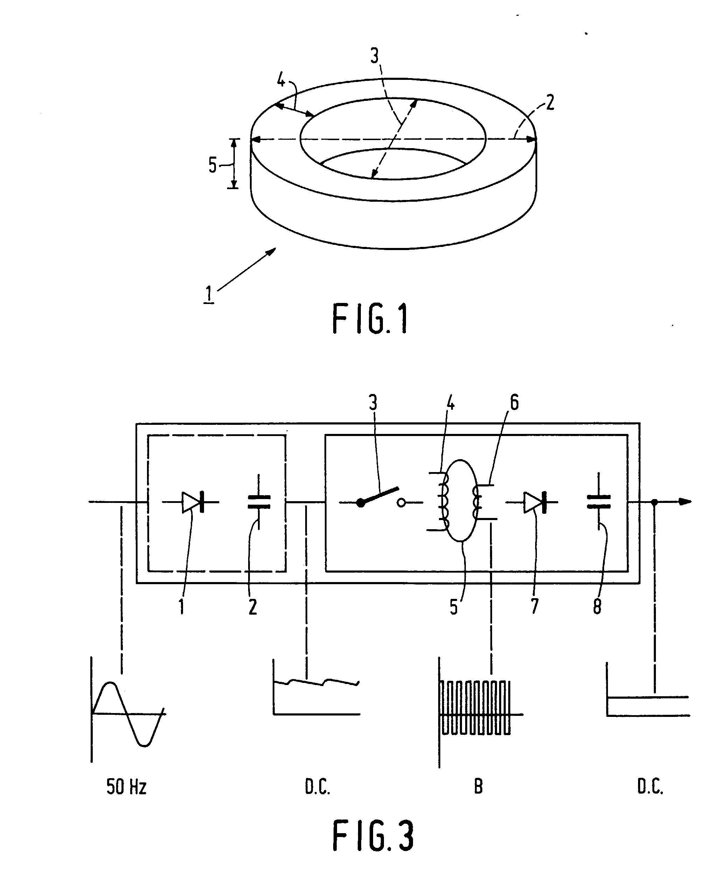

Fig. 1 shows an annular transformer core 1 having an outside diameter 2 of 5 mm and an inside diameter 3 of 3 mm. The width 4 and the height 5 are 1 mm. The core may alternatively have another, for example oval, shape. The cross-section of the ring may alternatively be rectangular or round instead of the square cross-section shown in the Figure. The sintered transformer cores in accordance with the present invention may alternatively rod-shaped (inductor), E-shaped or U-shaped. It is also possible to have tube-shaped cores, f.i. for use in h.f. induction bulbs. The transformer core consists of sintered NiZn ferrite. The composition of the sintered material is given by the formula Ni_{0.49}Zn_{0.49}Co_{0.02}Fe_{1.90}O_{3.85}. The material consists of sintered grains having a monodomain structure and an average grain size of 2.2 µm.

For the manufacture of transformer cores in accordance with the invention, use was made of a powder of NiZn ferrite. This powder was manufactured by means of standard ceramic techniques. In the manufacture, oxides and/or carbonates of the metals were mixed in a proportion which corresponds to the intended composition, presintered and wet-ground. The mixture thus obtained was either dried and granulated or dry-sprayed and subsequently compacted into the intended shape and sintered in air. In this manner, a number of the above-described transformer cores having different average grain sizes were manufactured by varying the sintering temperature (1000°C-1300°C) and the sinter duration. The core material, which has an average grain size of 0.3 microns, was manufactured by means of hot-isostatic pressing.

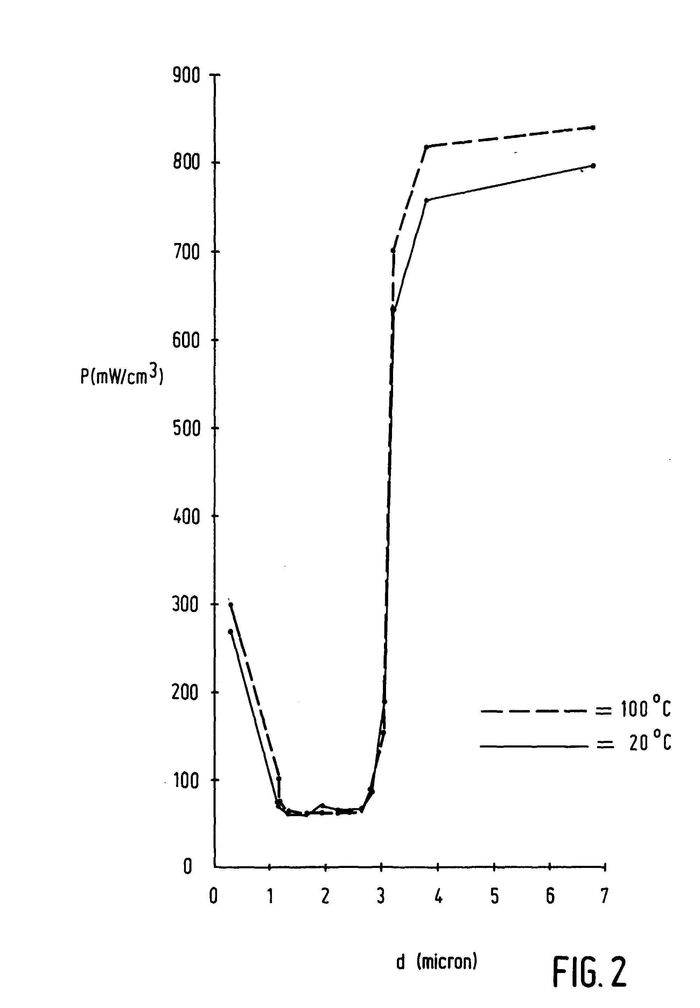

Fig. 2 shows a graph in which the overall losses per volume unit P of the transformer cores of the above composition are shown as a function of the average grain size ("linear mean-intercept" values). The measurement was carried out at 20°C and at 100°C at a frequency of 3 MHz and an induction of 10 mT. The Figure clearly shows that at grain sizes ranging between 1.1 and 2.8 µm, the overall losses are below 100 mW/cm³. The smallest overall losses are found, however, at an average grain size ranging between 1.3 and 2.6 µm. These losses are only approximately 80 mW/cm³. By means of neutron-depolarization measurements on these cores it was established that substantially 100% of the grains of the transformer cores having an average grain size below 2.6 µm have a monodomain structure.

**TABLE 1**

| Example | d | P1 | P2 | P3 |
|---|---|---|---|---|
| a | 6.8 | 797 | 1000 | 1350 |
| b | 3.8 | 759 | 978 | 1385 |
| c | 3.3 | 633 | 800 | 1244 |
| d | 3.1 | 190 | 240 | 150 |
| 1 | 2.6 | 82 | 78 | 91 |
| 2 | 2.4 | 66 | 64 | 59 |
| 3 | 2.2 | 67 | 66 | 59 |
| 4 | 1.7 | 58 | 56 | 51 |
| 5 | 1.1 | 75 | 74 | 66 |

Table 1 lists the overall losses per volume unit P (mW/cm³) of a number of transformer cores in accordance with the invention (examples 1 up to and including 5), in comparison with a number of transformer cores which are not in accordance with the invention (comparative examples a up to and including d). The material having an average grain size of 3.1 microns (comparative example d) is the known 4F1 material. The overall losses per volume unit P of the cores were determined under three different conditions: P1 (3 MHz and 10 mT), P2 (5 MHz and 7.5 mT) and P3 (10 MHz and 5 mT). This Table clearly shows that the quality of the cores in accordance with the invention is superior to the quality of the known cores.

The average value δ of the transformer cores listed in Table 1 was approximately 10 nm. A substantial further reduction of the losses of the cores having monodomain grains could be achieved by using cores having a δ-value of approximately 1-2 nm.

Fig. 3 diagrammatically shows a transformer of the "switched mode power supply"-type in which the transformer core in accordance with the invention can be very advantageously used. The input mains voltage (50 Hz) is first rectified with a rectifier (1) and then smoothed with a capacitor (2). The DC voltage thus formed is converted to a square-wave B by means of a switch (3) (switching transistor) at very high frequencies (2-20 MHz). This square-wave is applied to the primary winding (4) of the transformer core (5). The transformed square-wave signal which is formed on the secondary winding (6) of the transformer core is subsequently rectified by rectifier (7) and smoothed by capacitor (8). In this manner, a DC voltage of the desired value is obtained. Of course, the cores in accordance with the invention can also be used in other types of transformers. However, the effect of the invention is obtained, in particular, when these cores are used in transformers which are operated at high frequencies (above 2 MHz) in combination with high inductions (above 5 mT).

## Claims

1. A sintered transformer or inductor core (1,5) of NiZn ferrite material, characterized in that at least 90% of the grains of ferrite material have a monodomain structure.

2. A core (1,5) as claimed in Claim 1, characterized in that the average grain size of the ferrite material is 2.8 µm or less.

3. A core (1,5) as claimed in Claim 2, characterized in that the average grain size of the ferrite material ranges between 1.3 and 2.6 µm.

4. A core (1,5) as claimed in Claim 1, 2 or 3, characterized in that the ferrite material of the core comprises 42.8-55.9 mol% Fe₂O₃, 17.6-45.7 mol% NiO and 8.4-34.3 mol% ZnO.

5. A core (1,5) as claimed in Claim 4, characterized in that the ferrite material of the core comprises 42.8-50.0 mol% Fe₂O₃, 20.0-45.7 mol% NiO and 10.0-34.3 mol% ZnO.

6. A core (1,5) as claimed in any one of the preceding Claims, characterized in that the ratio of the average grain size d to the initial permeability µᵢ at the Curie temperature is d/µᵢ < 4 nm.

7. An inductor comprising an inductor core having a winding, characterized in that an inductor core as claimed in any one of the preceding Claims is used.

8. A transformer comprising a transformer core (5) having a primary (4) and a secondary (6) winding as well as a high-frequency switch (3) for converting a DC voltage on the primary winding to a square-wave voltage, characterized in that a transformer core (5) as claimed in any one of the Claims 1-6 is used.

## Patentansprüche

1. Gesinterter Transformator- oder Induktorkern (1, 5) aus NiZn-Ferritmaterial, dadurch gekennzeichnet, daß wenigstens 90% der Körner des Ferritmaterials eine monodomäne Struktur haben.

2. Ken (1, 5) nach Anspruch 1, dadurch gekennzeichnet, daß die mittlere Korngröße des Ferritmaterials 2,8 µm oder weniger beträgt.

3. Kern (1, 5) nach Anspruch 2, dadurch gekennzeichnet, daß die mittlere Korngröße des Ferritmaterials zwischen 1, 3 und 2, 6 µm liegt.

4. Kern (1, 5) nach Anspruch 1, 2 oder 3, dadurch gekennzeichnet, daß das Ferritmaterial des Kerns 42,8 - 55,9 Mol% Fe₂O₃, 17,6 - 45,7 Mol% NiO und 8,4 - 34,3 Mol% ZnO aufweist.

5. Kern (1, 5) nach Anspruch 4, dadurch gekennzeichnet, daß das Ferritmaterial des Kerns 42,8 - 50,0 Mol% Fe₂O₃, 20,0 - 45,7 Mol% NiO und 10,0 - 34,3 Mol% ZnO enthält.

6. Kern (1, 5) nach einem der vorstehenden Ansprüche, dadurch gekennzeichnet, daß das Verhältnis zwischen der mittleren Korngröße d und der Ausgangspermeabilität µᵢ; bei Curie-Temperatur d/µᵢ; < 4 nm ist.

7. Induktor mit einem Induktorkern mit einer Wicklung, dadurch gekennzeichnet, daß ein Induktorkern nach einem der vorstehenden Ansprüche verwendet wird.

8. Transformator mit einem Transformatorkern (5) mit einer Primärwicklung (4) und einer Sekundärwicklung (6) sowie mit einem HF-Schalter (3) zum Umwandeln einer Gleichspannung an der Primärwicklung in eine Rechteckspannung, dadurch gekennzeichnet, daß ein Transformatorkern (5) nach einem der Ansprüche 1 bis 6 verwendet wird.

## Revendications

1. Noyau de transformateur ou d'induction fritté (1, 5) en matériau de ferrite NiZn, caractérisé en ce qu'au moins 90% des grains en matériau de ferrite présentent une structure monodomaine.

2. Noyau (1, 5) selon la revendication 1, caractérisé en ce que la grosseur de grain moyenne du matériau de ferrite est égale ou inférieure à 2,8 µm.

3. Noyau (1, 5) selon la revendication 2, caractérisé en ce que la grosseur de grain moyenne du matériau de ferrite est comprise entre 1,3 et 2,6 µm.

4. Noyau (1, 5) selon la revendication 1, 2 ou 3, caractérisé en ce que le matériau de ferrite du noyau contient 42,8 à 55,9% en moles de Fe₂O₃, 17,6 à 45,7% en moles de NiO et 8,4 à 34,3% en moles de ZnO.

5. Noyau (1, 5) selon la revendication 4, caractérisé en ce que le matériau de ferrite du noyau contient 42,8 à 50,0% en moles de Fe₂O₃, 20,0 à 45,7% en moles de NiO et 10,0 à 34,3% en moles de ZnO.

6. Noyau (1, 5) selon l'une quelconque des revendications précédentes, caractérisé en ce que le rapport de la grosseur de grain moyenne d à la perméabilité initiale µᵢ à la température de Curie est égal à d/µᵢ < 4 nm.

7. Inducteur comportant un noyau d'induction présentant un enroulement, caractérisé en ce qu'il est utilisé un noyau d'induction selon l'une quelconque des revendications précédentes.

8. Transformateur comportant un noyau de transformateur (5) présentant un enroulement primaire (4) et un enroulement secondaire (6) aussi bien qu'un commutateur à haute fréquence (3) pour convertir une tension continue présente sur l'enroulement primaire en une tension rectangulaire, caractérisé en ce qu'il est utilisé un noyau de transformateur selon l'une quelconque des revendications précédentes 1 à 6.
